Europäisches Patentamt

European Patent Office

Office européen des brevets

(19)

(11) Publication number: **0 170 068 B1**

(12) **EUROPEAN PATENT SPECIFICATION**

(45) Date of publication of patent specification: **04.09.91**  (51) Int. Cl.⁵: **G01L 5/24**

(21) Application number: **85108102.6**

(22) Date of filing: **29.06.85**

(54) Bolt fastening method.

(30) Priority: **29.06.84 JP 134577/84**
**14.08.84 JP 169724/84**
**06.07.84 JP 140051/84**

(43) Date of publication of application:
**05.02.86 Bulletin 86/06**

(45) Publication of the grant of the patent:
**04.09.91 Bulletin 91/36**

(84) Designated Contracting States:
**DE GB SE**

(56) References cited:
**DE-A- 2 719 744**　　**DE-A- 2 843 810**
**US-A- 3 962 910**　　**US-A- 3 982 419**
**US-A- 4 027 530**　　**US-A- 4 365 402**

(73) Proprietor: **KABUSHIKI KAISHA KOMATSU SEISAKUSHO**
**3-6, Akasaka 2-chome**
**Minato-ku Tokyo 107(JP)**

(72) Inventor: **Aoki, Magane**
**2-20, Ueno 2-chome**
**Hirakata-shi Osaka-fu(JP)**
Inventor: **Michiuchi, Nobuyuki**
**6-4-103, Ueno 2-chome**
**Hirakata-shi Osaka-fu(JP)**
Inventor: **Fuchigami, Masao**
**417, Higashi 5-1, Yawa-Yoshino-Gaito**
**Yawata-shi Kyoto-fu(JP)**

(74) Representative: **Selting, Günther, Dipl.-Ing. et al**
**Deichmannhaus am Hauptbahnhof**
**W-5000 Köln 1(DE)**

## Description

This invention relates to a bolt fastening method which detects the gradient of fastening torque every time when a bolt is fastened to a predetermined angle to determine when to stop the fastening action based on such torque gradient.

Proposed in US-A-3 982 419 is a conventional method for detecting the gradient of fastening torque every time when a bolt is fastened to a specific angle, and stops fastening when the torque gradient has decreased by a certain amount from its maximum value on the assumption that the bolt has been fastened down to its yield point.

When a bolt is being fastened, presence of dust, flaws, rust, etc. on the contact face of the bolt seat causes the coefficient of friction of the contact face to change, resulting in substantial decrease in the torque gradient (this phenomenon is called a torque slip).

Also, when there are clearances between the parts being fastened by the bolt, a slip occurs.

The above-mentioned conventional method erroneously judges that the bolt has been fastened down to its yield point when such slips occur, resulting in stopping the fastening action although the bolt has not been completely tightened.

The precharacterizing part of claim 1 refers to a method of fastening a bolt as disclosed in US-A-4 027 530. The known apparatus for tightening fasteners comprises a calculating system for determining and storing a maximum gradient signal experienced up to any point in the tightening cycle. When the measured gradient signal falls to a predetermined percentage of the maximum previously stored gradient signal, a control signal is generated stopping the tightening of the assembly. A value of approximately two thirds of the maximum gradient signal has been found to be an acceptable value to ensure that the bolt has been tightened to its yield point.

It is a drawback of the known technology that in case of slippage of the screw thread or due to other irregularities such as dust, misadjusting may occur so that the bolt is not fully tightened. According to the known system, a yield point is always assumed if the measured gradient signal falls to a predetermined value. There is no detection as to whether this point is a "false" or a "true" yield point because a change in slope of the torque curve may be also caused by irregularities.

It is the object of the invention to provide a method for fastening a bolt wherein misadjustment of the bolt due to irregularities such as a slippage or dust may be avoided so that the true yielding point may be found upon tightening of the bolt.

This object is solved, according to the invention, with the features contained in claim 1.

According to the invention, after the gradient of fastening torque has reached its maximum value, when it becomes a value smaller than a first threshold value, which is obtained by multiplying the maximum value or its approximate maximum value by $\alpha(\alpha<1)$, the bolt is further fastened by a specific angle $\theta_0$ which is set to be large enough to clear the slip of fastening torque. Then, one of the following procedures is taken:

a) Bolt fastening is stopped or terminated when the difference between the fastening torque at the end of fastening angle $\theta_0$ and that at its beginning, becomes smaller than a preset value.

b) As a characteristic L' for ascertaining the truth of the yield point, a straight line is drawn by connecting the fastening torque $T_0$ at the end of fastening the angle $\theta_0$ to the torque $T_B$ at a fastening angle which is $\theta_s$ earlier than the angle at the fastening start time ($\theta_s$ is a calculated angle of torque gradient), so that bolt fastening will be stopped when the measured torque characteristic L between both ends of such straight line is portioned above said characteristic L'.

c) Bolt fastening is stopped when the torque gradient at the end of fastening the angle $\theta_0$ is smaller than the second threshold value.

d) Bolt fastening is stopped when each torque gradient obtained during fastening the angle $\theta_0$ tends to decrease gradually.

e) Correlations are obtained between the fastening torque variation characteristic measured during fastening the angle $\theta_0$ and a preset standard fastening torque change characteristic, so that bolt fastening will be stopped when a close correlation exists between the two characteristics.

f) The fastening work of the angle $\theta_0$ is carried out whenever it is judged that the torque gradient at the end of fastening work is smaller than the second threshold value, and bolt fastening will be stopped when such judgment has been formed by a preset number of times.

In this invention, even if a false yield point appears because of dust, flaws, rust, etc. on the contact face of a bolt seat or because of clearances between parts fastened by bolt, bolt fastening action is continued until a true yield point appears, thereby enabling proper and secure bolt fastening by eliminating the problems inherent in the conventional method which causes bolt fastening to be stopped due to a false yielding point.

Actual applications of this invention are described below, referring to the accompanying drawings.

Figs. 1 and 2 are flow charts showing an embodiment of bolt fastening carried out according to the subject invention;

Fig. 3 is a block diagram showing an example of a bolt fastening device applied to this method;

Fig. 4, 6, 8, 10, 11, 13 and 15 are flow charts showing the processings of yield point truth/fault judging step of Fig. 1;

Fig. 5 is a graph illustrating the processing of Fig. 4;

Fig. 7 is a graph illustrating the proceeing of Fig. 6;

Fig. 9 is a graph illustrating the processing of Figs. 8 and 10;

Fig. 12 is a graph illustrating the processing of Fig. 11;

Fig. 14 is a graph illustrating the processing of Fig. 13;

Fig. 16 and 17 are flow charts showing another embodiment of bolt fastening according to the subject invention;

Fig. 18, 20, 22 and 24 show the content of the yield point truth/false judging threshold value Ls employing in the flow chart of Fig. 16;

Fig. 19 is a graph illustrating the processing when the threshold value of Fig. 18 is employed;

Fig. 21 is a graph ilustrating the processing when the threshold value of Fig. 20 is employed;

Fig. 23 is a graph illustrating the processing when the threshold values of Figs. 22 and 24 are employed;

Fig. 25 is a graph showing the accuracy of bolt fastening by the conventional and the present methods;

Fig. 26 and 27 are flow charts showing till another embodiment of bolt fastening according to the subject invention;

Fig. 28 is a graph illustrating the processing of Fig. 26: and

Fig. 29 shows another method for obtaining the gradient of fastening torque.

Procedures shown in the flow charts are carried out by a micro-computer provided in this fastening device.

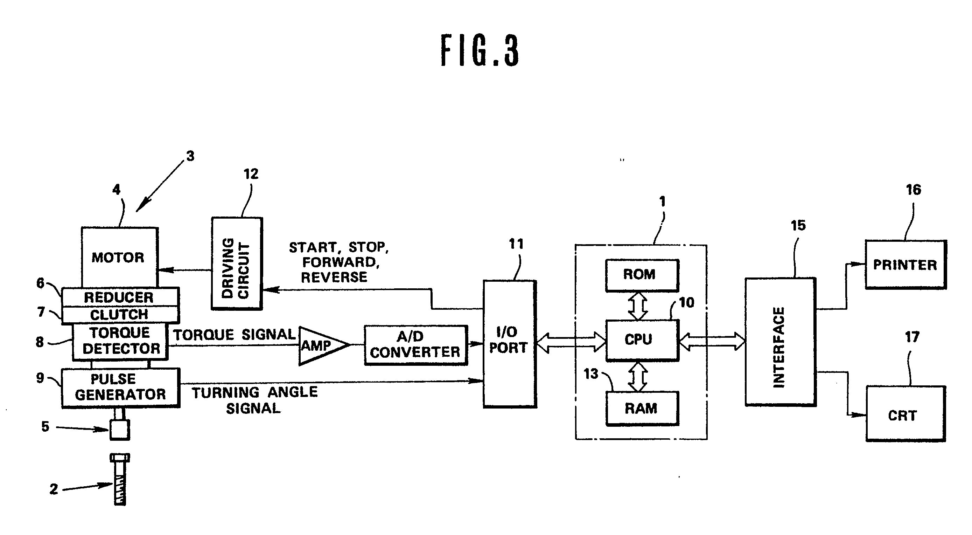

Referring to Fig. 3, the bolt fastening unit comprises a bolt fastener 3 for fastening the bolt 2. The bolt fastener comprises a reversible motor 4 driven electrically, hydraulically or pneumatically, a speed reducer 6 combined with a clutch 7 for transmitting the motor power to a socket wrench 5, a torque detector 8 for detecting the fastening torque of bolt 2 as an electric signal issued from the socket wrench 5, and a pulse generator 9, such as an incremental encoder, which generates pulse signals every time when the socket wrench 5 is turned by a minute angle $\theta_A$.

A bolt fastening method of this invention is carried out as follows, using the bolt fastening device.

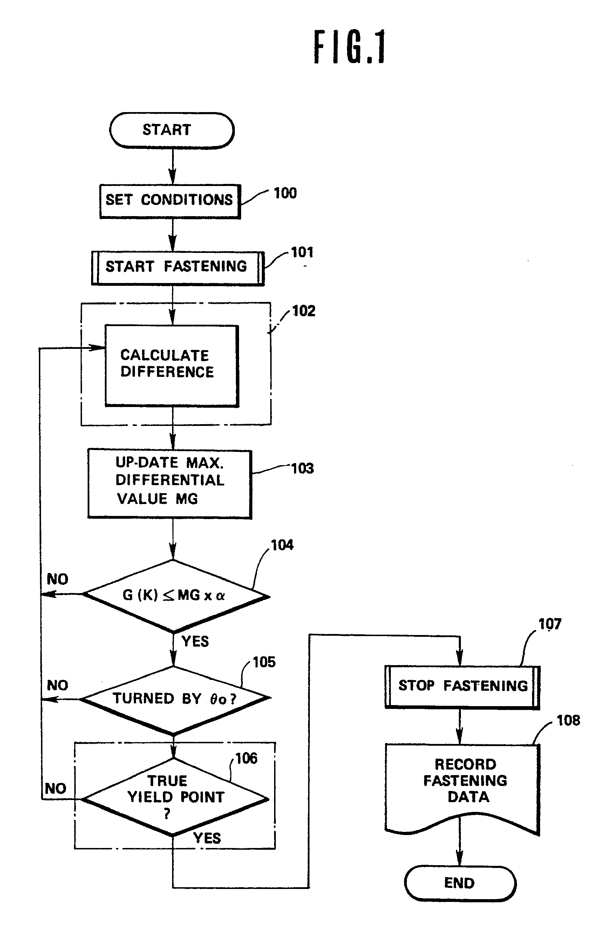

As shown in Fig. 1, various conditions are set such as a sampling turning angle $\theta_A$ (e.g. 1-2°), a turning angle interval $\theta_s$ for calculating average values (e.g. set to be 2 to 6 times of $\theta_A$), a fastening turning angle $\theta_s$ for judging a yield point (e.g. set to be 2 to 6 times of $\theta_s$), a reference value $\delta$ for judging torque difference $\Delta T$, a coefficient $\alpha$ for setting a torque gradient threshold value (e.g. it is set for 0.7 to 0.3) and a coefficient $\beta$ for setting a true yield point judging threshold level (step 100).

After setting these conditions, a fastening start signal is issued from the central processing unit (CPU) 10 of a micro computer 1 as shown in Fig. 3 to an I/O port 11. As a result; the motor 4 and the clutch 7 are started by way of a driving circuit 12, causing fastening of the bolt 2 to be started (step 101).

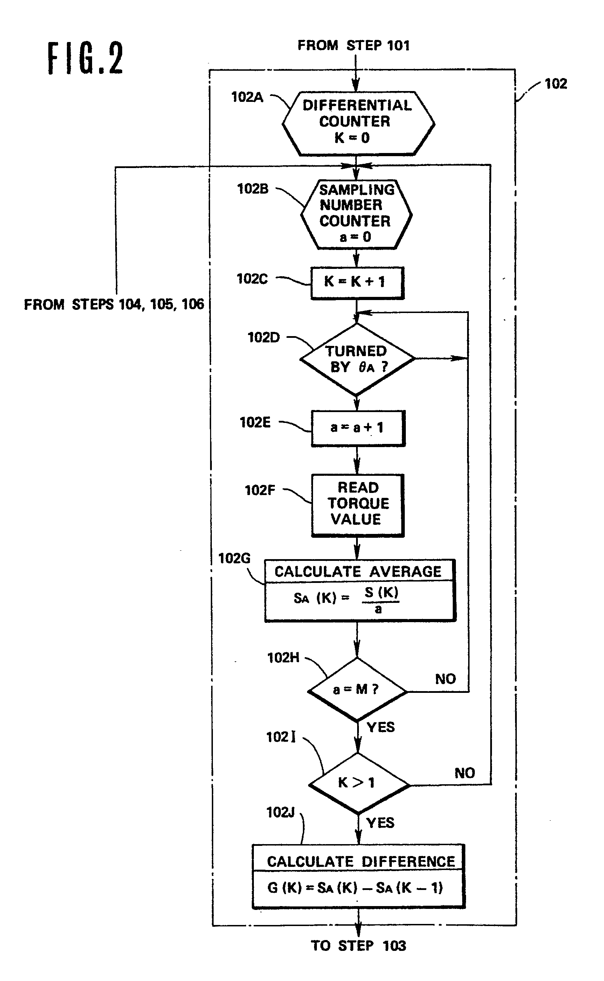

Fig. 2 indicates the detail of difference value calculation process as shown in Step 102 of Fig. 1. In the step 102, as shown in the figure, the count value k of the differential counter contained in CPU 10 and the count value a of a sampling number counter is initiated as k=0 and a=0, respectively (step 102A and 102B).

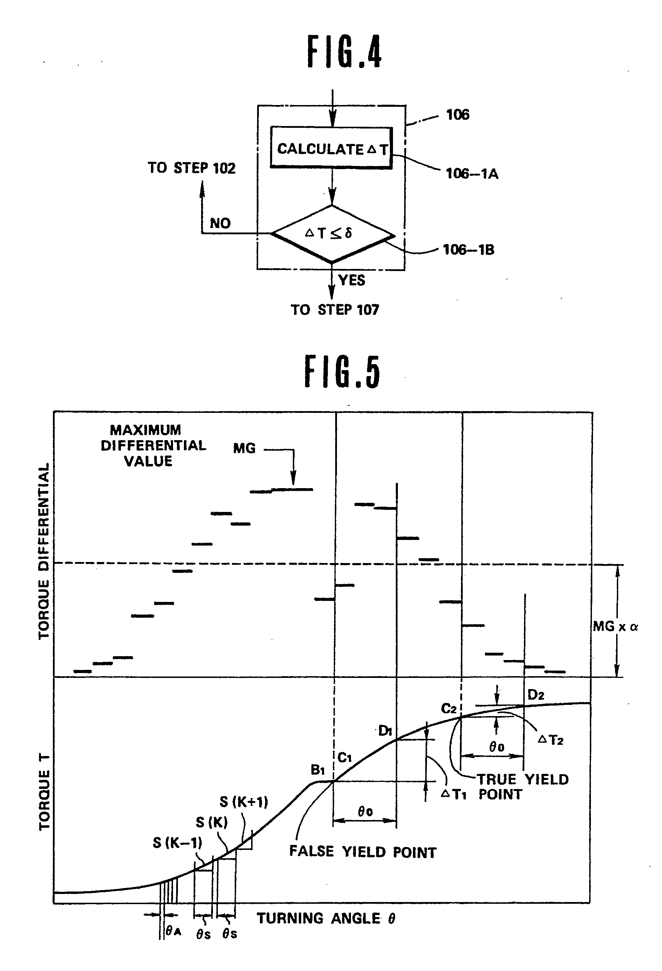

Then, as the differential counter value is increased by one (step 102C), a turning angle input signal is issued to I/O port 11. As a result, the pulse signals issued from a pulse generator 9 are taken into judgment as to whether or not the number of such pulse signals has reached a preset constant, that is, the number corresponding to the sampling turning angle $\theta_A$ as shown in Fig. 5 (step 102D). When such judgment indicates YES, sampling number counter value a is incremented by one (step 102E), and at the same time, the output of the torque detector 8, which shows the torque at that time, is sampled (step 102F).

The sampled torque value Ta is added to the memory (zero at first) of an average value register in CPU 10, and an average value

$$S_A(k) = \frac{S(k)}{a}$$

of the added result S(k) is computed (Step 102G).

3

The procedures as shown in steps 102E to 102G are repeated until the judgment in step 102H shows YES, that is, until the count value showing the sampling number of fastening torque becomes

$$\frac{\theta_S}{\theta_A} + 1 = M.$$

When the judgment indicates YES, the average value $S_A(k)$ in step 102G suggests the average of all of the torque values sampled during the angle step $\theta_s$ as shown in fig. 5.

When the judgment of step 102H becomes YES, judgment is made as to whether or not the differential counter value K is greater than 1 (step 102I). Since the value K is equal to 1 at this point, the judgment of step 102I is No, and hence, the contents as shown in steps 102B to 102I are carried out again. When k> 1, that is, when two average values $S_A(R)$ are obtained, the difference G(k) between the average value $S_A(k)$ at the present angle step $\theta_s$ and the average value $S_A(k-1)$ at the previous angle step $\theta_s$ is computed as a torque gradient (step 102J).

When the differential value G(k) is computed, a renewal process of the maximum differential value as shown in step 103 is executed. Since only one differential value G(k) has been obtained at this point, this differential value is memorized in a maximum differential value register (not shown in the figure) as a maximum differential value MG.

In step 104, judgment is made as to whether or not the bolt 2 has been fastened down to its yield point. Namely, judgment is made as to whether or not the differential value G(k), which corresponds to the torque gradient as obtained at step 102J of Fig. 2, has become smaller than MG x $\alpha$(obtained by multiplying the maximum differential value MG by the coefficient $\alpha$ (0.5 in this embodiment). Since G(k) = MG at this point, judgment is NO, thus resuming steps 102B to 102J.

In this way, a differential value G(k), that represents the torque gradient, is computed every time when the bolt 2 is turned by an angle $\theta_s$ and its maximum value MG of the differential value G(k) is renewed. The differential value G(k) tends to decrease as shown in Fig. 5 as the bolt starts yielding, thus its peak value being stored in the register as a final maximum differential value MG.

Even when the judgment of step 104 becomes YES, it does not necessarily suggest the yield point for the reason that a torque slip phenomenon occurs as shown in the sections B, C in fig. 5 when dust, flaws, rust, etc. exist on the contact face of bolt seat or when there are clearances between parts fastened by the bolt, with the result that the degree of increase in the fastening torque, that is a torque gradient, decreases from the above-mentioned MG x $\alpha$ even when the bolt has not been fastened down to its yield point yet.

In this embodiment, therefore, as shown in step 105, when judgment of step 104 becomes YES, the bolt is further turned by the angle $\theta_0$ so as to judge whether the above judgment shows the true yield point at step 106.

Figs. 4, 6, 8, 10, 11 and 13 show actual applications of judgment in step 106, and in the example given in fig. 4, $\Delta T$, that represents the difference between the fastening torque at fastening angle ($C_1$ and $C_2$ in Fig. 5) when judgment of step 104 becomes YES and that at fastening angle ($D_1$ and $D_2$ in Fig. 5) that corresponds to angles when the bolt is further turned by $\theta_0$ from the angle, is calculated (step 106-1A) to determine whether $\Delta T \leq \delta$ ($\delta$: a preset value)(step 106-1B).

As shown in Fig. 5, when judgment of step 104 becomes YES at $C_1$, which is not the true yield point of the bolt, the increasing degree $\Delta T_1$ of the fastening torque during turning of the angle $\theta_0$ is large, while the fastening torque increasing degree $\Delta T_2$ during $\theta_0$ turning is extremely small.

The above-mentioned preset value $\delta$ is set for a little larger than the torque increasing degree $\Delta T_2$ relative to the true yield point; hence, when the judgment of step 106-1B is NO, it suggests a false yield point, and the contents shown in steps 102 to 105 are repeated. When a true yield point is detected at step 104, judgment in step 106-1B becomes YES, and a stop signal is issued to I/O port 11 to stop fastening the bolt 2 (step 107).

The fastening angle $\theta_0$ is set large enough to clear the slip shown in the section $B_1 C_1$, that is, set to 2 to 6 times as large as the angle $\theta_s$ as mentioned earlier.

Torque data, turning angle data, etc. at the time or until fastening is stopped may be recorded on a printer 16 by way of an interface 15, and displayed on CRT 17 (step 108).

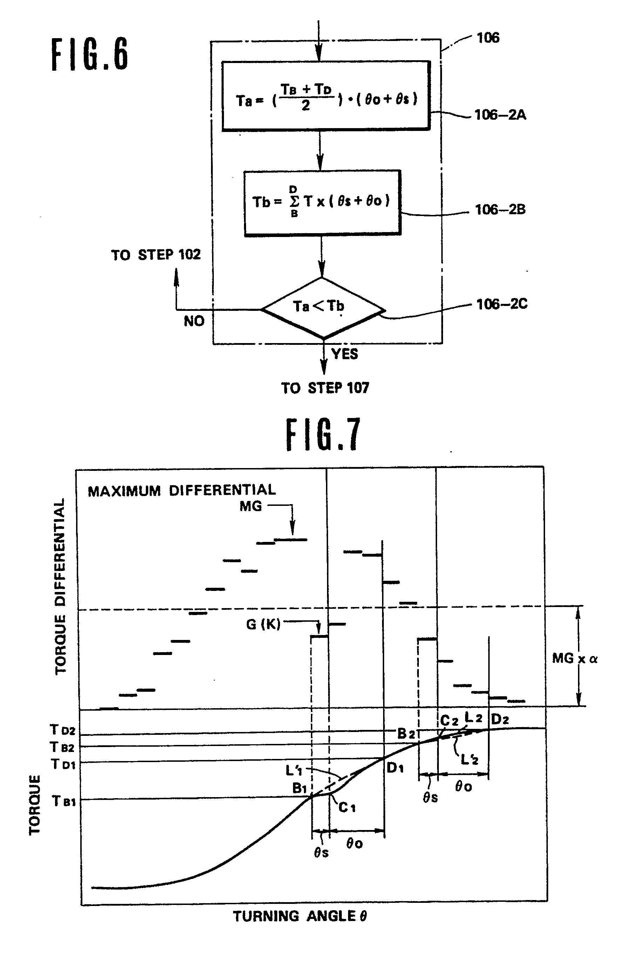

In the following, descriptions are provided about the actual application of Fig. 6 process.

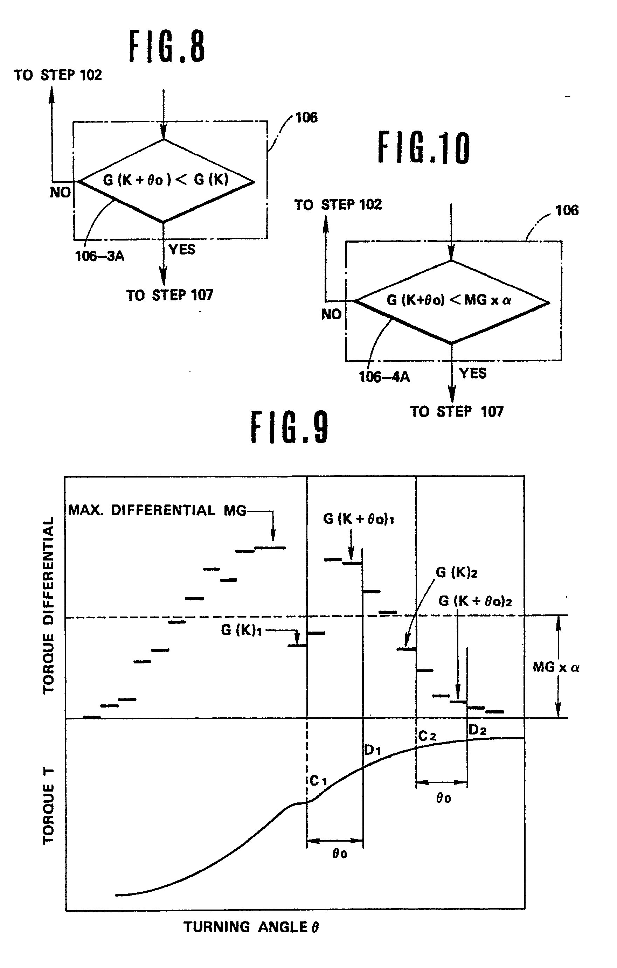

In Fig. 7, when judgment of step 104 at a false yield point $C_1$ becomes YES, a line segment $B_1 D_1$ (true yield point judgement reference line $L_1'$), that is drawn by connecting the point $B_1$ showing torque $T_{B1}$ at a turning angle which precede from the point $C_1$ by angle $\theta_s$ to the point $D_1$ showing torque $T_{D1}$ when the bolt is turned from the point $C_1$ by the angle $\theta_{01}$, is positioned above the curve $B_1 C_1 D_1$ showing measured

4

torque variations.

On the other hand, when a true yield point is detected at $C_2$ point, the line segment $B_2D_2$ (the reference line $L_2$ for judging the truth of yield point) will be positioned below the actual torque curve $B_2C_2D_2$ - (measured torque curve $L_2$).

In the embodiment shown in Fig. 6, therefore, the average

$$\frac{T_B + T_D}{2}$$

of the torque $T_B$ at point B ($B_1$, $B_2$) and that at point D ($D_1$, $D_2$) is multiplied by ($\theta_s + \theta_0$) (step 106-2A), and

$$\sum_{B}^{D} T \times (\theta s + \theta_0)$$

is computed (step 106-2B) based on each torque value sampled from BD ($B_1D_2$, $B_2D_2$) and also judgment is made as to whether or not Ta and Tb, calculated results at step 106-2A and step 106-2B respectively, hold the relation of Ta < Tb (step 106-2C).

The value Ta obtained at step 106-2A and the value $T_b$ obtained at step 106-2B indicate respectively the torque integrals of the area below the line segment BD and the curve BCD. Therefore, when judgment at step 106-2C is NO, it shows that the curve BCD is below the line segment BD, that is, a false yield point $C_1$ is detected at step 104. When the judgment is YES, on the other hand, it shows that a true yield point $C_2$ is detected at step 104.

In this embodiment, the truth of an yield point is judged based on differences in areas as mentioned above. Apart from this method, a functional form of the line segment BD may be obtained and a torque value on said line segment may be determined by substituting the value of turning angle corresponding to point C for the above function to compare the torque value on the line segment with that at point C.

In the embodiment of Fig. 8, judgment is made as to whether or not the torque differential value G(k) at point C ($C_1$, $C_2$) of Fig. 9 and G(k + $\theta_0$) just before point D ($D_1$, $D_2$) hold a relation of G(k + $\theta_0$) < G(k) (step 106-3A).

As is apparent from Fig. 9, when the judgment of step 104 becomes YES by a false yield point (point $C_1$), G(k + $\theta_0$) becomes greater than G(k), and when the judgment of the same step becomes YES by a true yield point (point $C_2$), a relation of G(k + $\theta_2$) < G(k) holds. Therefore, depending on a YES or NO judgment of step 106-3A, the true or false of an yield point is judged.

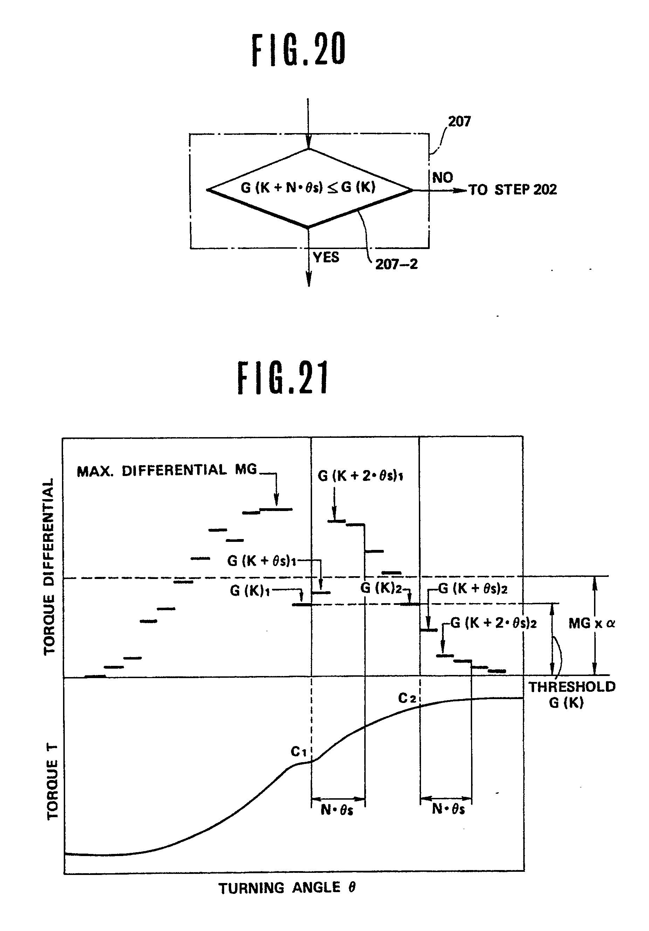

In the embodiment shown in Fig. 20, judgment is made as to whether or not the torque differential value G(k + $\theta_0$) as shown in Fig. 9 and a threshold value MG x $\alpha$ for detecting an yield point hold a relation of G-(k + $\theta_0$) < MG x $\alpha$ (step 106-4A). When a false yield point is detected at point $C_1$, a relation of G(k + $\theta_2$) > MG x $\alpha$ holds as shown in Fig. 9, while a relation of G(k + $\theta_2$) < MG x $\alpha$ holds when a true yield point is detected at point $C_2$, thereby enabling judgment of the true yield point based on the judgment of step 106-4A.

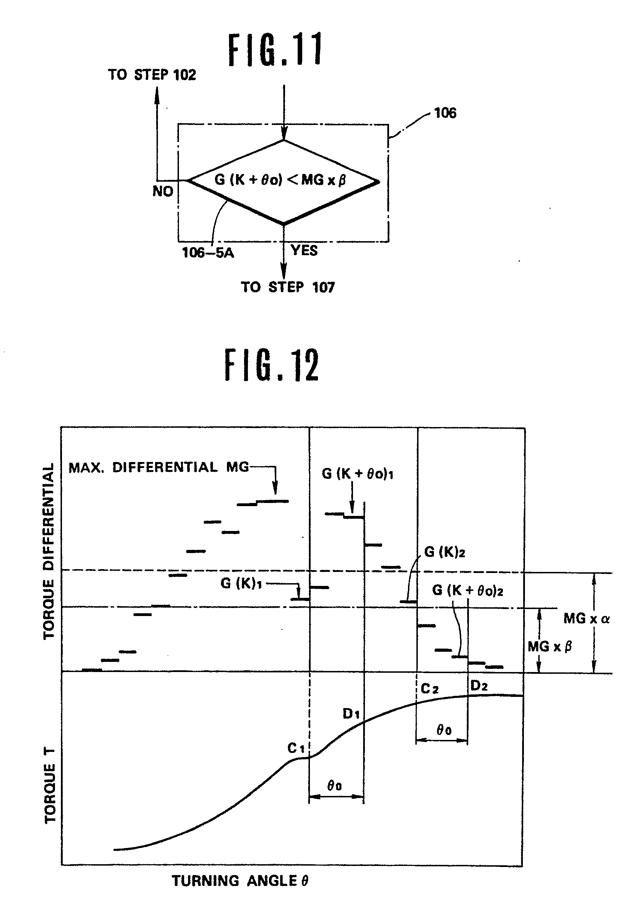

In the embodiment of Fig. 11, another threshold value, MG x $\beta$ ($\beta$<1) as shown in Fig. 12, that is different from the foregoing threshold value MG x $\alpha$, is set to judge whether or not the torque differential value G(k + $\theta_2$) and said threshold value MG x $\beta$ hold a relation of G(k + $\theta_2$)≦ MG x $\beta$ (step 105-A). As is apparent from the figure, judgment becomes YES when the bolt is fastened down to a true yield point $C_2$.

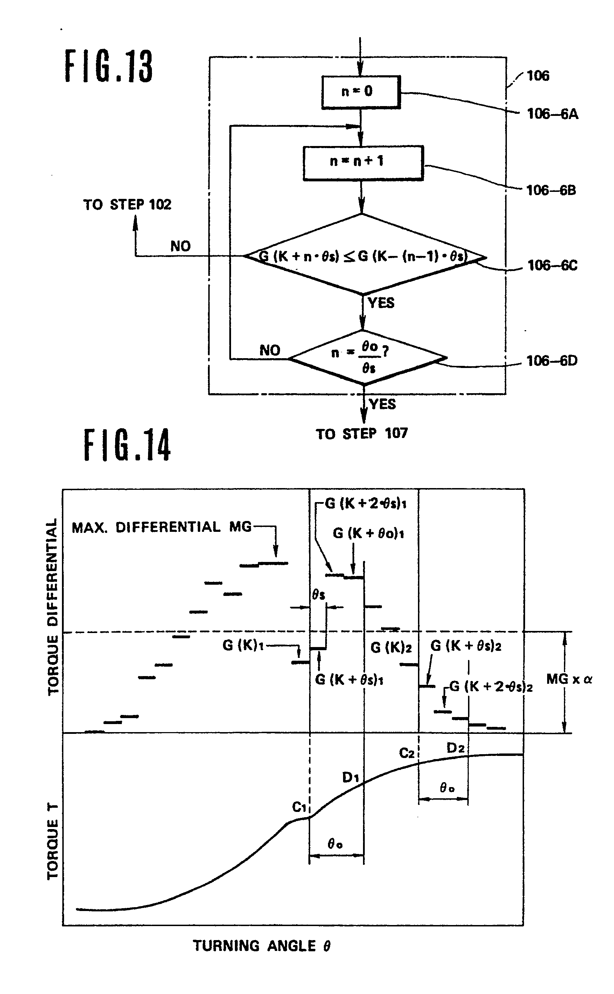

Fig. 13 shows another embodiment of judging the true or false of an yield point. As is apparent from Fig. 14, when a false yield point $C_1$ is detected, the differential value between points $C_1$ and $D_1$ tends to increase at least once, while this value tends to gradually decrease between points $C_2$ and $D_2$ when a true yield point $C_2$ is detected.

In this embodiment, the true or false of a yield point is judged, taking notice of the above-mentioned fact. Namely, the value n of a counter provided in CPU 10 for counting differential values between points C and D is set as n = 0 (step 106-6A), and then the value n is incremented by one (step 106-6B) to form a judgment on G(k + n x $\theta_0$) < G(k + (n-1)x$\theta_s$)(step 106-6C).

In the step 106-6C, judgment on G(k + $\theta_s$) ≦ G(k) at n = 1 is made, that is, whether or not the differential value G(k + $\theta_s$), that was first detected between points C and D, has decreased relative to the differential value G(k) at the time of G(k) ≦ MG x $\alpha$, is judged. If a false yield point $C_1$ appears, the differential value G-(k + $\theta_s$), that was first detected in the embodiment of Fig. 14, becomes greater than G(k). As a result, judgment at step 106-6C becomes NO; resulting in resumption of the steps 102 to 105 as shown in Fig. 1.

5

When the differential value $G(k+\theta_s)$ first detected is smaller than $G(k)$, that is, when judgment of step 106-6C is YES, whether or not the value n in the counter has reached $n = \theta_0/\theta_s$ (number of differential values between points C and D) is judged (step 106-6D). If this judgment is No, the steps 106-6B and 106-6C are resumed. Since the differential value between points $C_1$ and $D_1$ monotonously increases, judgment of 106-6C becomes No before n becomes equal to $\theta_0/\theta_s$.

When a true yield point is detected at point $C_2$, the differential values detected between points $C_2$ and $D_2$ decrease gradually as mentioned above. As a result, the counter value is increased to $n = \theta_0/\theta_s$ and it is judged the differential value $G(k)_2$ at this point shows a true yield point.

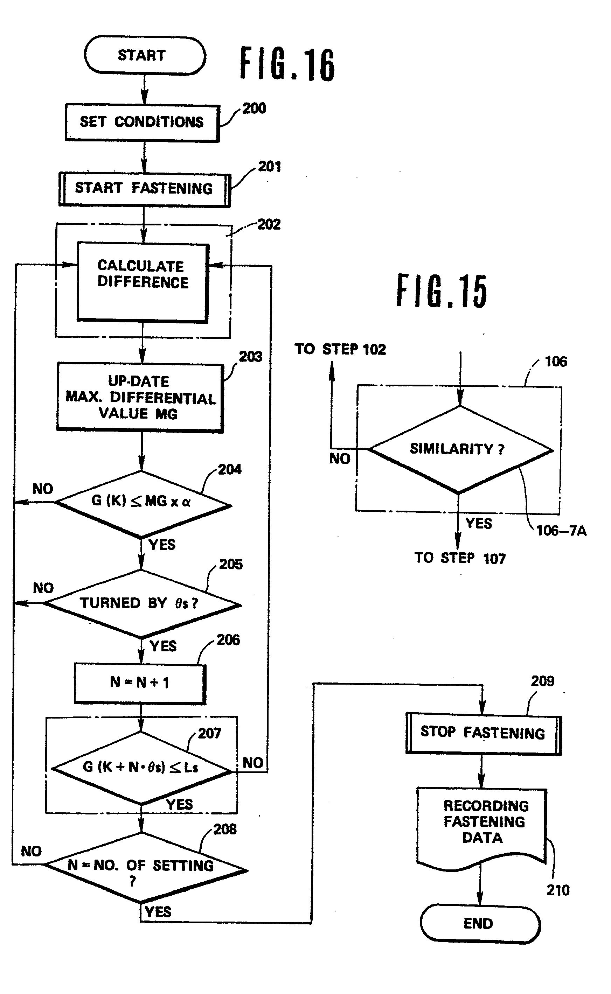

There is another method of detecting a true yield point as described below. As shown in Fig. 14, torque increase between $C_2$ and $D_2$ is gradual as compared with that between $C_1$ and $D_1$, that is, the torque increasing pattern during the angle $\theta_0$ after appearance of a false yield point $C_1$ differs from that after appearance of a true yield point $C_2$. Therefore, if the torque increasing pattern during the angle $\theta_0$ in relation to a true yield point $C_2$ (standard torque increasing pattern) is memorized in RAM 13 of Fig. 3 so that similarity between the measured torque increasing pattern during the angle $\theta_0$ and the standard torque increasing pattern stored in RAM 13 will be obtained by a correlation method, judgment can be made as to whether the YES judgment of step 104 suggests a false yield point or a true one. The step 106-7A of Fig. 15 shows such judging process.

Fig. 16 shows still another embodiment of this invention which judges the true or false of an yield point by turning a bolt by $\theta_s$ angle step after the differential value $G(k)$, that represents torque gradient, becomes $G(k) \leq MG \times \alpha$.

In the figure, steps 200, 201, 203 and 204 have the same contents as those of steps 100, 101, 103 and 104 of Fig. 1 respectively, and steps 209 and 210 have the same contents as those of steps 107 and 108 of Fig. 1.

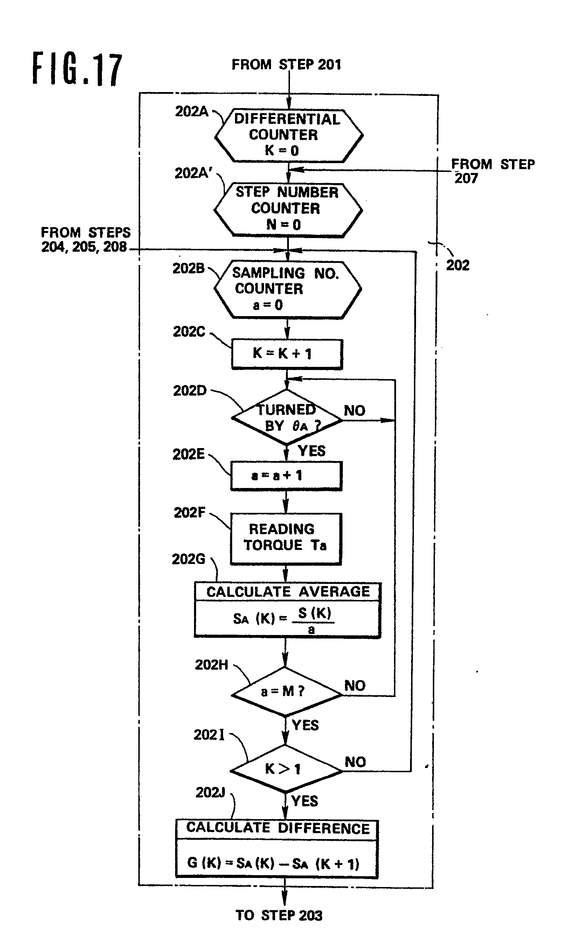

Fig. 17 shows the detail of diffrential calculation process in step 202, in which steps 202A, 202B to 202J have the same contents as those of 102A, 102B to 102J shown in Fig. 2.

In this embodiment, there is provided a step number counter for counting the number of steps in the angle step of $\theta_s$ of bolt after the result of judgment of step 204 becomes YES, and a step 202A' for returning the count number N of the step number counter to an initial 0 value is provided between steps 202A and 202B as shown in Fig. 17.

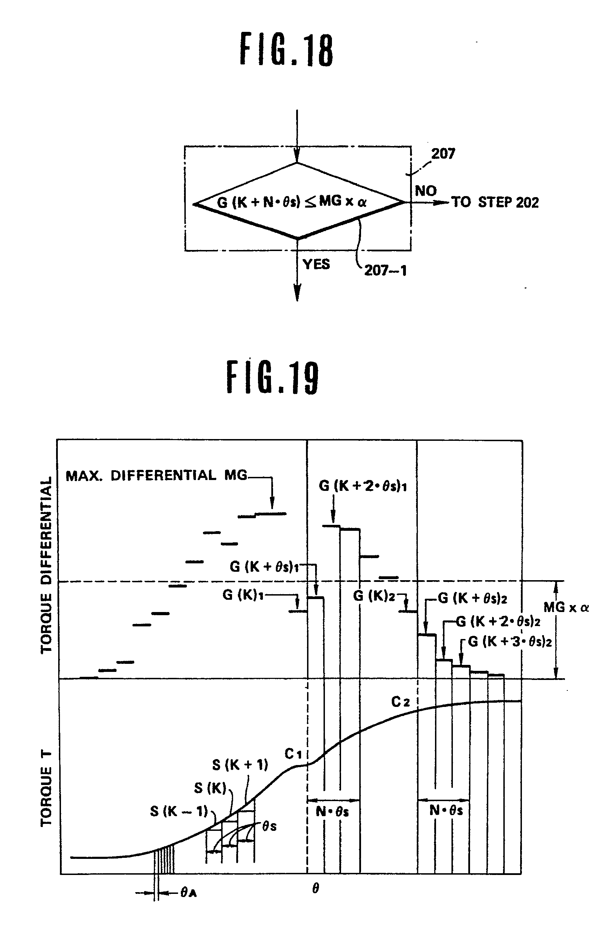

In this embodiment, when judgment of step 204 becomes YES by a false yield point $C_1$ or by a true yield point $C_2$ as shown in Fig. 19, judgment is made as to whether or not the bolt is turned by angle $\theta_s$ to the fastening direction subsequently (step 205). When this judgment indicates YES, the value N in the step number counter is increased by one (step 206) and it is judged whether the torque differential value $G(k+N \cdot \theta_s)$ at that point is smaller than the threshold value (step 207).

When the judgment of step 207 is YES, it is then judged whether the value N on the step number counter has reached the preset number (step 208). When the judgment of step 208 is YES, fastening of the bolt is stopped (step 209), and when it is NO, the step is returned to step 208B as shown in fig. 7.

On the other hand, when the judgment of step 207 is NO, the step is returned to step 202A' as shown in Fig. 17, resetting the step number counter accordingly.

Now assume that the threshold value Ls in step 107 is set for $MG \times \alpha$ as shown in Fig. 18. As indicated in Fig. 19, after a false yield point $C_1$ is detected, the torque gradient (torque differential) increases again, becoming greater than $MG \times \alpha$. Namely in the example of Fig. 18, when the bolt is turned until N becomes equal to 2, torque gradient $G(k+2\theta_s)$ becomes greater than $MG \times \alpha$. Therefore, if the number of times in step 208 is set for "2" to 5 for instance, there is no fear of stopping bolt fastening by a false yield point $C_1$.

On the other hand, after a true yield point is detected, torque differential value decreases as the bolt is fastened at an angle step of $\theta_s$ as shown in the figure.

For example, if "3" is chosen for the count value N, the judgment of sep 208 becomes YES after procedures shown in steps 205 to 208 are repeated 3 times, causing bolt fastening to be stopped.

In this example, therefore, the bolt fastening is continued when a false yield point $C_1$ is detected, and when a true yield point $C_2$ is detected, fastening of the bolt is stopped after the bolt has been turned by an angle $N \cdot \theta_s$ from the detected point.

In Fig. 20, the threshold value Ls at step 207 is set for the torque gradient $G(k)$ ($G(k)_1$, $G(k)_2$) relative to point C ($C_1$, $C_2$) (step 207-2). When a false yield point $C_1$ is detected, a part or all of the torque gradients detected over the angle range of $N \cdot \theta s$ become larger than the threshold value $G(k)$, and hence, the judgment of step 208 does not indicate YES. On the other hand, when a true yield point is detected, each torque gradient detected in the angle range of $N \cdot \theta_s$ thereafter becomes smaller than the threshold value $G(k)$. In the example, too, therefore, bolt fastening is stopped only when a true yield point is detected.

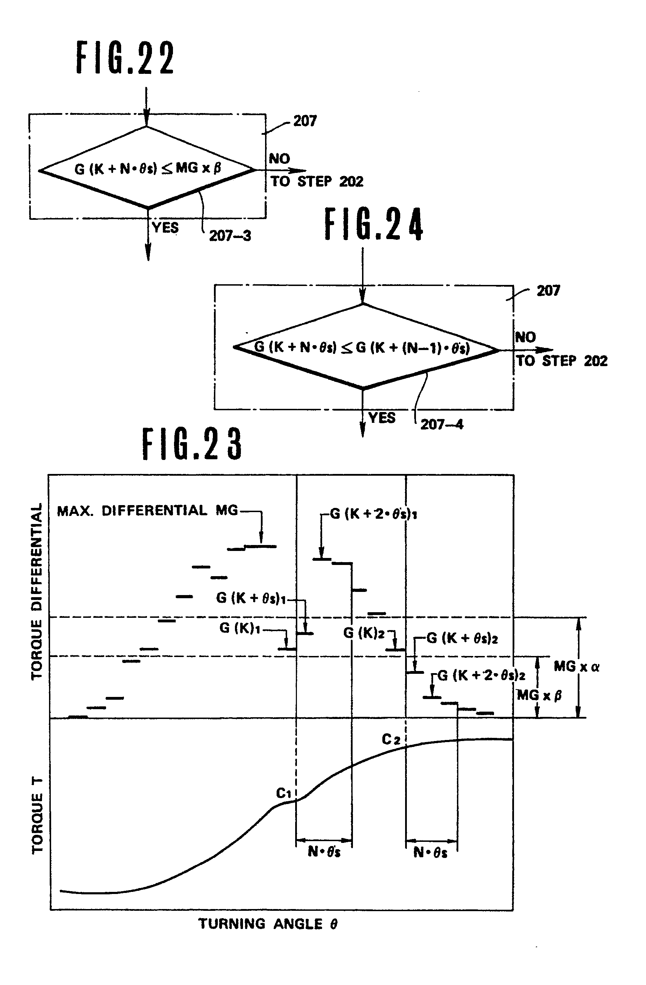

Fig. 22 shows another example (207-3) of step 207 in which the threshold value is set for $MG \times \beta$. The

coefficient $\beta$ is smaller than 1 and different from the coefficient $\alpha$. The threshold value $Ls = MBx\beta$, is set as shown in Fig. 23 for example, therefore.

Fig. 24 shows still another example (207-4) of step 207 in which a torque gradient $G(k+(N-1)\cdot\theta_s)$ is used for the threshold value $Ls$. In this case, in step 207, whenever the bolt is turned by an angle $\theta_s$, the torque gradient before turning $G(k+(N-1)\cdot\theta_s)$ is compared to that after turning $G(k+N\cdot\theta_s)$ to judge which of the two is greater.

When a false yield point $C_1$ is detected, a condition where the torque gradient surely increases just after the detection, that is, a condition causing $G(k+N.\theta_s) \geqq G(k+(N-1)\theta_s)$ appears, resulting in a NO judgment in step 207. Therefore, N does not reach the set number in step 208, causing bolt fastening to be continued.

On the other hand, when a true yield point $C_2$ is detected, each torque gradient value detected over the angle $N\cdot\theta_s$ as shown in Fig. 19, etc. decreases from that at an angle step of one step earlier; namely, individual torque gradient tends to decrease gradually. In such cases, when the bolt is turned by $N\cdot\theta_s$, the judgment of step 208 becomes YES, thereby stopping the fastening of the bolt.

The number of times in step 208 is set large enough to allow the angle $N\cdot\theta_s$ to clear slip noise; when $\theta_s = 1^\circ$ t $10^\circ$, N is set as 2 to 5 for example.

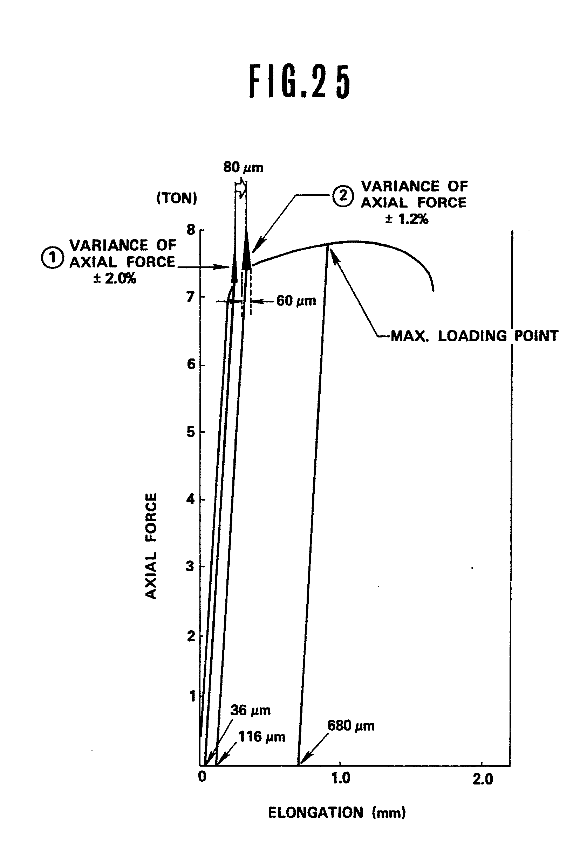

Fig. 25 shows an axial force vs. elongation graph of M12 bolt (12mm in diameter), and also shows comparative fastening stop accuracies of the conventional bolt fastening method and the method of this invention, expressed by the dispersion of axial forces, ① and ② . The data of 2 are based on the embodiments of Figs. 4, 6, 8, 10, 11, 13, 15, 18, 20 and 22 when $\theta_0 = 20^\circ$, $N\cdot\theta_s = 20^\circ$ and $\alpha = 0.6$ are set.

In Fig. 25, the fastening stop accuracy ① of the conventional method shows the case where a false yield point does not appear in which the dispersion of axial forces is ±2.0%. On the other hand, in the case of subject invention, the dispersion of the axial force is within the range.of ±1.2%, which suggests the fastening stop accuracy is excellent. In the subject invention, bolt is fastened down to its yield point and then further fastened by an angle $\theta_0$ or $N\cdot\theta_s$, thus causing the bolt to elongate 80 $\mu$m toward its plastic region. However, elongation of such extent matters little.

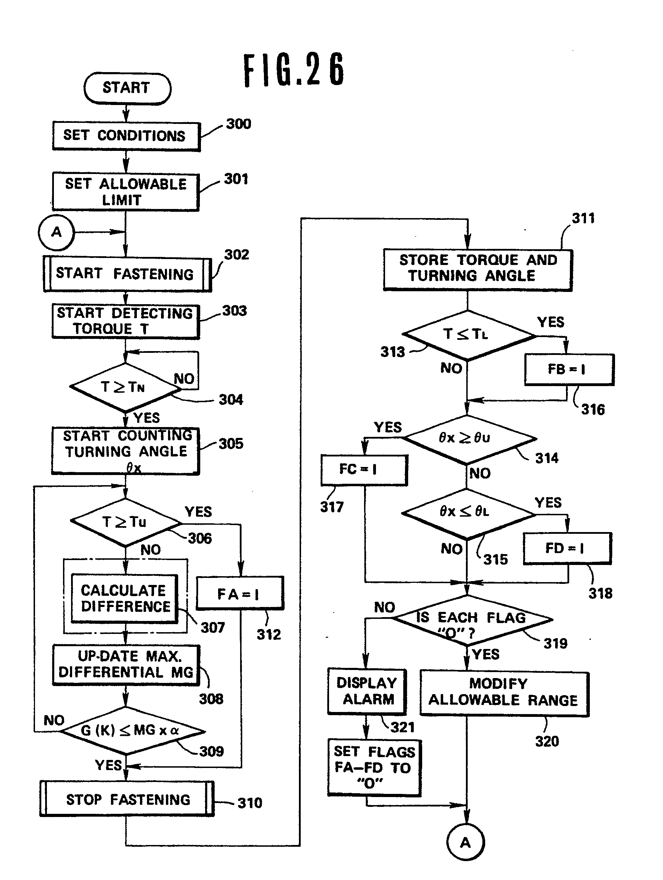

Fig. 26 shows another embodiment for judging the suitability of fastening condition. In this embodiment, conditions corresponding to step 100 as shown in fig. 1 are set (step 300), and then a setting procedure of fastening allowance is carried out as shown in step 301. As physical quantities variables with bolt fastening, a fastening-turning angle and a fastening torque are detected; in step 301, the upper and lower limits $\theta_u$ and $\theta_L$ starting fastening of bolt 2 (step 302). Based on the output from the torque detector 8, detection of fastening torque is started and whether or not fastening torque has reached the conformable torque $T_N$ is judged (step 304).

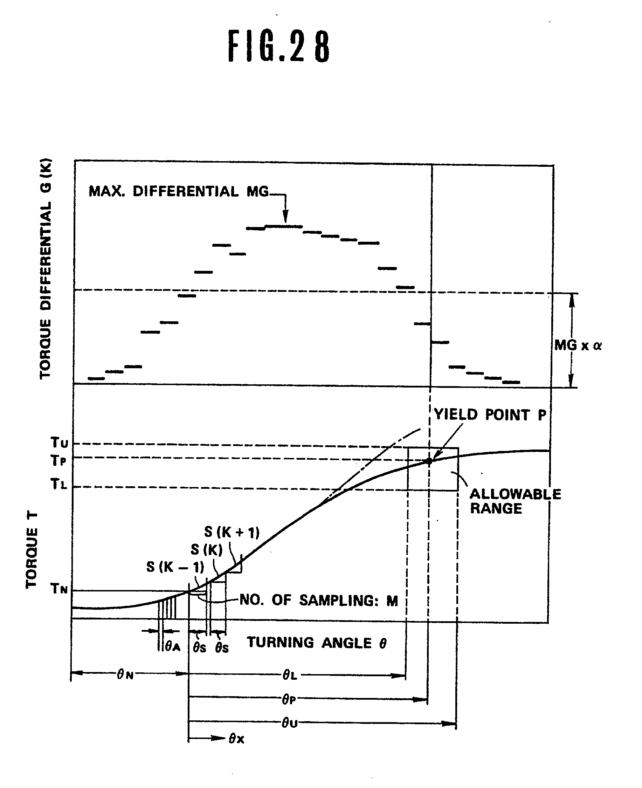

When it is judged at step 304 that fastening torque has reached the conformable torque, counting of fastening-turning angle $\theta_x$ based on fastening-turning angle $\theta_N$ of the conformable torque (refer to Fig. 28) is started (step 305), and it is judged whether or not the fastening torque T is greater than the upper limit $Tu$ which was set at step 301 (step 306). Since $T< Tu$ at this point, judgment becomes No, and differential calculation as shown in the broken line frame is executed (step 307).

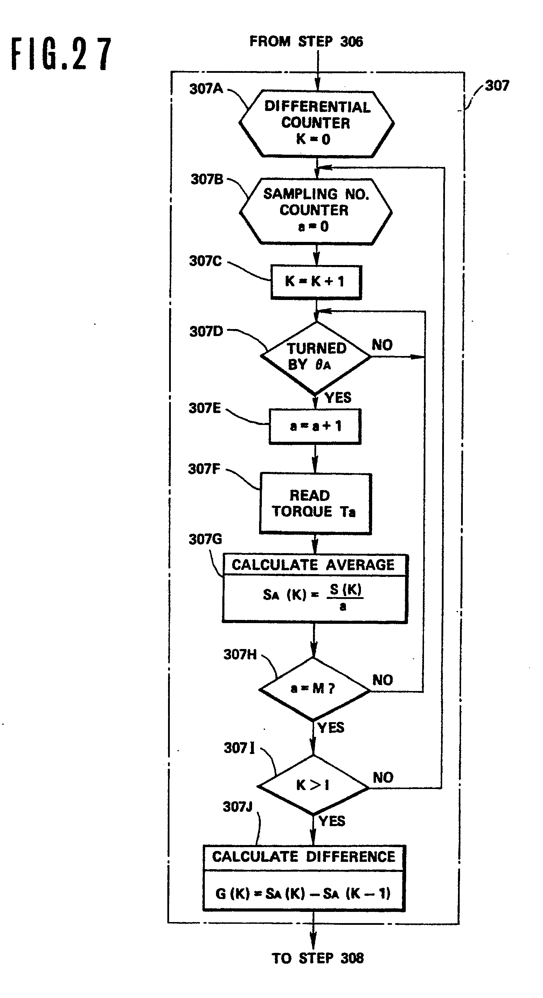

Fig. 27 shows the contents of differential calculation in step 307. Steps 307A to 307J in the figure have the same contents as those of steps, 102A to 102J, that are shown in Fig. 2, respectively. By such differential of the fastening-turning angle when bolt fastening is stopped (or when it ends) and the upper and lower limits $Tu$ and $T_L$ of the fastening torque are set as shown in Fig. 28.

The above-mentioned upper and lower limits of the fastening-turning angle, $\theta u$ and $\theta_L$, are determined based on a turning angle $\theta_N$ relative to the so-called conformable torque $T_N$.

The above-mentioned values, $\theta u$, $\theta_L$, $Tu$ and $T_L$ are set according to the types of bolt to be fastened rather roughly based on the past fastening data. Such setting is made according to the operator's manual operations. The set values are stored in RAM 13.

Upon completion of the setting procedure of the allowable range, a fastening start signal is issued from CPU10 of micro-computer (as shown in Fig. 3) to I/O port 11, with the result that the motor 4 and the clutch 7 are energized by way of the drive circuit 12, thereby calculation, differential value $G(k)$ showing torque gradient is obtained, and then renewal process of maximum differential value MG (step 208) and yield point judgment process are executed (step 209). Steps 208 and 209, correspond to steps 103 and 104 of Fig. 1 respectively.

When judgment of step 309 shows YES, the bolt is deemed to have yielded, causing its fastening to be stopped step 30U, and fastening torque (yield torque Tp) and fastening-turning angle (yield turning angle $\theta$p) at the time of stop are stored in RAM 13 (step 311).

When the bolt is properly fastened, the fastening torque Tp and the fastening-turning angle ($\theta$p at the yield point P indicate values within fastening allowable limits as shown in Fig. 27, but when bolt is not fastened properly for some reasons (e.g. existence of dust, oil, etc. on bottom face of bolt), the torque may exceed the upper limit Tu prior to detecting yield point or even of yield point is detected, the torque Tp at the time may be smaller than the lower limit $T_L$. Also occur such phenomena that yield turning angle $\theta p$ becomes smaller than the lower limit $\theta u$ or greater than the upper limit $\theta_L$.

In this embodiment, therefore, it is judged whether bolt has been properly fastened or not, as follows:

For instance, when judgment of step 306 becomes YES before judgment of step 309 becomes YES as a result of torque change as shown by point-chain line of Fig. 28, that is, before yield point is detected, flag FA showing $T \geq Tu$ is set as FA = 1 by CPD10 (step 312). In this case, since it may be undesirable to continue fastening, bolt fastening is stopped by jumping to step 310.

When judgment of step 309 indicates YES, comparative judgment is made on fastening torque Tp and fastening-turn angle $\theta p$ at the time of bolt stop which has been stored at step 311. Namely, comparative judgments on whether or not torque T at step 313 is smaller than lower limit $T_L$ and on whether or not turning angle $\theta x$ at step 14 is greater than upper limit $\theta u$, and also judgment as to whether turning angle $\theta_x$ at step 315 is less than lower limit $\theta_L$, are carried out in succession. In case of $T \leq T_L$, flag FB is set as FB-1; in case of $\theta x \geq \theta u$, flag FC is set as FC = 1 and in case of $\theta x \geq \theta_L$, flag Fd is set as FD = 1 (steps 316, 317 and 318).

In step 319, it is judged whether flags, FA to FD are all zero. When the result of such judgment is YES, or when yield torque Tp and yield turning angle $\theta p$ are within the allowable limits, bolt is deemed to have been properly fastened and statistical computation as shown in later-mentioned step 320 is executed. When the result of such judgment is No, alarm indications by lamp, buzzer or CRT17 of Fig. 1 appear (step 321), thereby notifying the operator of improper fastening. Following execution of step 321, flags FA to FD are set as 0 (step 322), and fastening of another bolt is started.

Descriptions of contents of step 320 are provided as follows: In step 320, review of the allowable limits is conducted by the following statistical computations on the basis of fastening data at the time of stopping when bolt is properly fastened (in this embodiment, torque at stop time T = Tp, and turning angle at stop time $\theta x = \theta p$.) and also based on proper fastening data obtained at previous fastening.

i) Computation of average value T of torque T at stop time
Computation of standard deviation of torque T at stop time $(\sigma_{N-1})_T$.
ii) Computation of average value $\theta x$ of turning angle at stop time.
Computation of standard deviation of turning angle at stop time $(\sigma_{N-1})_\theta$.
iii) Computation of the corrected upper limit torque Tu,

$$Tu = T + X_1 (\sigma_{N-1})_T$$

Computation of the corrected lower limit torque/

$$T_L = T - X_2 (\sigma_{N-1})_T$$

Computation of the corrected upper limit turning angle,

$$\theta u = \theta x + X_3 (\sigma_{N-1})_\theta$$

Computation of the corrected lower limit turning angle,

$$\theta_L = \theta x - X_4 (\sigma_{N-1})_\theta$$

When the corrected values of the upper limit torque Tu, the lower limit torque $T_L$, the upper limit turning angle $\theta u$ and the lower limit turning angle $\theta_L$ are obtained by the process of step 320, the above-mentioned allowable limits are set based on such corrected values, followed by fastening of next bolt. Therefore, whether or not bolt is fastened properly is judged based on corrected allowable limits.

At the time when the first bolt is properly fastened, the average values T and $\theta x$ obtained by above mentioned computations i) and ii) naturally show the stop torque and stop turning angle of the first bolt.

Corrective procedures of step 320 are carried out whenever individual bolts are properly fastened. Therefore, if the allowable limits are set roughly at first, review and correction of the allowable limits are conducted whenever the bolt is fastened, and the optimum allowable limits are set automatically accordingly. Even when the bolt type is changed halfway, the allowable limit applicable to this bolt is automatically set. In other words, since this embodiment has learning functions for the allowable limits, such limits are automatically set so as to be suitable for the bolt to be fastened once rough allowable limit is set initially.

Factors $X_1$ to $X_4$, used in the above iii) computation are set as $X_1$ to $X_4 \fallingdotseq 2$ for instance when fastening stop ranges should be strictly controlled. When strict control is not necessary or when it is necessary to expedite pitch time, they are set as 3 to 5 for instance.

In this embodiment, the fastening torque T and the fastening-turn angle $\theta x$ are used as physical quantities for setting the allowable limits. Sufficient practicable effects are obtainable by using either one of the two quantities. To ensure a highly accurate fastening effect, however, it is recommendable to set allowable limits using both quantities.

While in this embodiment, bolt fastening is stopped when the torque differential G(k) becomes smaller than threshold value MG x $\alpha$ as shown in step 309, also applicable to this invention are a turning angle fastening method which stops fastening at the time when bolt has been turned by a preset angle (fastening angle where bolt presumably enters its plastic range a little) from turning angle $\theta_N$ where the conformable torque $T_N$ appears, as well as a torque fastening method which stops fastening when fastening torque has reached a preset value. When the former method is used, judgments of steps 314 and 315 as shown in Fig. 26 are unnecessary, and when the latter method is applied, judgments of steps, 306 and 315 shown in the figure becomes unnecessary.

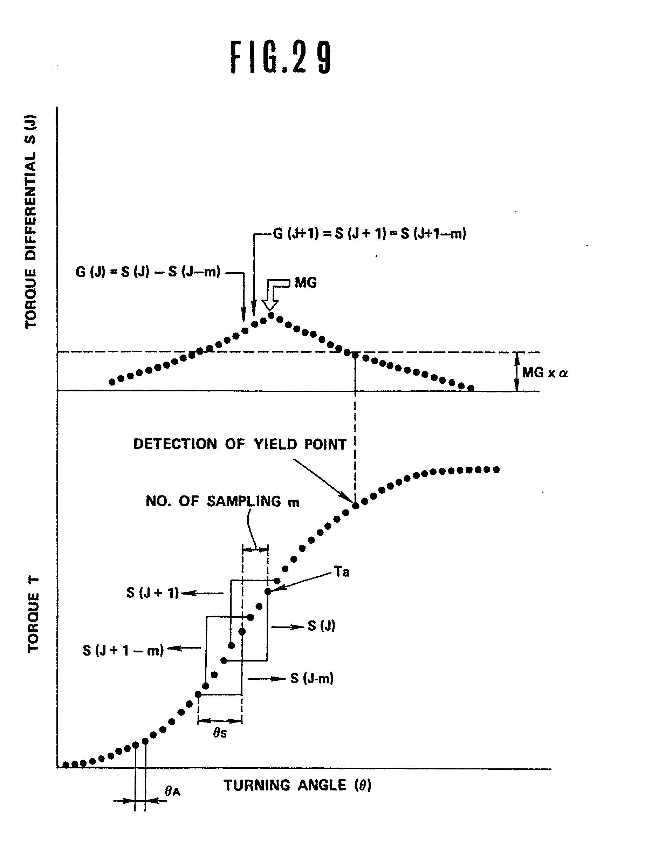

Further, although in the embodiments shown in figs. 1, 16 and 26, the differential value that represents torque gradient is detected in such a way as shown in Fig. 2, torque gradient may be obtained by other methods. For instance, as shown in Fig. 29, average value S(J) of fastening torques sampled over a section of angle $\theta s$ (6 samples in this figure) is obtained every time when sampled number increases by one so that the torque gradient will be determined as the difference between average values S(J) and S(J-M), the latter being the average prior to m sampling step.

Also the difference of torques between the beginning and end of angle section $\theta s$ may be detected every time when sample number increases by one, to represent torque gradient. The value m in Fig. 29 is set over the range of

$$1 \text{ to } \left(\frac{\theta_s}{\theta_A} - 1\right).$$

While in each embodiment mentioned above, threshold values as shown in stops 104, 204 and 309 are set as MG x $\alpha$, averages of maximum differential value MG, and the second largest and the third largest differential values may be obtained so that $\alpha$-multiples of said averages will be used as threshold values in steps 104, 204 and 309. Similarly, threshold values, MG x $\beta$, shows in Figs. 11 and 22 may be replaced by said averages multiplied by $\beta$.

## Claims

1. A method of fastening a bolt comprising the steps of:

detecting a fastening torque T each time the bolt (2) is fastened by a first predetermined angle $\theta_S$;

detecting a gradient G of the fastening torque based on the detected fastening torque T;

detecting a fact that the gradient G of the fastening torque becomes smaller than a threshold value for yielding point judgment which is determined by multiplying the maximum torque gradient MG or proximity thereto by a coefficient $\alpha$ which is smaller than 1,

characterized by the further steps:

fastening the bolt (2) in a bolt fastening section by a second predetermined angle $\theta_0$ which is large enough to clear fastening torque slips B-C after the gradient of the fastening torque becomes smaller than the threshold value for yielding point judgment;

judging the termination of the fastening of the bolt based on the change in the fastening torque of the bolt in the bolt fastening section $\theta_0$; and

terminating the fastening of the bolt based on the judgment.

2. A method of fastening a bolt of claim 1, wherein the coefficient $\alpha$ is between 0.3 and 0.7.

3. A method of fastening a bolt of claim 1 or 2, wherein the angle $\theta_0$ is 2 to 6 times greater than the angle $\theta_S$.

4. A method of fastening a bolt of claim 1, wherein the bolt fastening termination condition is determined by a judgment that a difference $\Delta T$ between a torque $T$ at a termination point D where the bolt fastening section $\theta_0$ is terminated and a torque $T$ at a start point C where the bolt fastening section $\theta_0$ starts is smaller than a preset value $\delta$.

5. A method of fastening a bolt of claim 1, wherein the bolt fastening termination condition is determined by a judgment that a measured torque curve L within an angle range between an angle which is smaller by the angle $\theta_S$ than the angle of the start point B of the bolt fastening section $\theta_0$, and the angle of the termination point D of the bolt fastening section $\theta_0$ is above a reference line L' connecting torque values $T_B, T_D$ at the start and the end of the angle range.

6. A method of fastening of a bolt of claim 5, wherein the judgment as to whether the measured torque curve L is above the reference line L' is calculated by the steps of:

calculating a torque integral value Ta based on the reference line L' by the following equation,

$$Ta = \frac{T_B + T_D}{2} ( \theta_0 + \theta_S )$$

where
$T_B :$ torque at the point B
$T_D :$ torque at the point D;
calculating a torque integral value Tb based on the measured torque curve L by the following equation, where

$$Tb = \sum_{B}^{D} T ( \theta_0 + \theta_S )$$

$T :$ torque in the angle range; and

comparing the torque integral values Ta and Tb thus calculated to judge that the measured torque curve L is above the reference line L' when the torque integral value Ta is smaller than the torque integral value Tb.

7. A method of fastening a bolt of claim 1, wherein the bolt fastening termination condition is determined by a judgment that a correlation between the measured torque curve L in the bolt fastening section $\theta_0$ and a predetermined reference torque curve is larger than a preset value.

8. A method of fastening a bolt of claim 1, wherein the bolt fastening termination condition is determined by a judgment that a torque gradient G at the termination point D of the bolt fastening section $\theta_0$ is smaller than a predetermined value.

9. A method of fastening a bolt of claim 8, wherein the predetermined value is a torque gradient G at the start point B of the bolt fastening section.

10. A method of fastening a bolt of claim 8, wherein the predetermined value is equal to the yielding point judgment threshold value.

**11.** A method of fastening a bolt of claim 10, wherein the predetermined value is smaller than the yielding point judgment threshold value.

**12.** A method of fastening a bolt of claim 1, wherein the bolt fastening termination condition is determined by a judgment that the gradient G of the bolt fastening torque T is in decrease in the bolt fastening section $\theta_0$.

**13.** A method of fastening a bolt of claim 1, wherein said step of fastening the bolt in the bolt fastening section by the second predetermined angle $\theta_0$ comprises a step of fastening the bolt in the bolt fastening section by the first predetermined angle $\theta_S$ at a predetermined number of times, and wherein the bolt fastening termination condition is determined by a judgment that the torque gradient G is consecutively smaller than a preset value at the predetermined number of times after the gradient of the fastening torque becomes smaller than the threshold value for yielding point judgment.

**14.** A method of fastening a bolt of claim 13, wherein the predetermined number of times is between 2 and 5.

**15.** A method of fastening a bolt of claim 13 or 14, wherein the preset value is equal to the threshold value for yielding point judgment.

**16.** A method of fastening a bolt of claim 13 or 14, wherein the preset value is smaller than the threshold value for yielding point judgment.

**17.** A method of fastening a bolt of claim 13 or 14, wherein the preset value is a torque gradient G when the torque gradient becomes smaller than the threshold value for yielding point judgment.

**18.** A method of fastening a bolt of claim 13 or 14, wherein the preset value is a torque gradient G when the bolt (2) is fastened first time after the torque gradient becomes smaller than the threshold value for yielding point judgment.

### Revendications

**1.** Procédé de serrage d'un boulon, comprenant les opérations consistant :

à détecter un couple de serrage T chaque fois que le boulon (2) est serré d'un premier angle $\theta_S$ fixé à l'avance,

à détecter un gradient G du couple de serrage sur la base du couple de serrage T détecté,

à détecter le fait que le gradient G du couple de serrage devient inférieur à une valeur de seuil, prévue pour un jugement de limite élastique, qui est déterminée en multipliant le gradient de couple MG maximal, ou une valeur maximale approchée de celui-ci, par un coefficient $\alpha$ qui est inférieur à 1,

caractérisé par les opérations supplémentaires consistant :

à serrer le boulon (2), dans une section de serrage de boulon, d'un second angle $\theta_0$ fixé à l'avance qui est suffisamment grand pour permettre que les glissements de couple de serrage B-C soient dépassés, après que le gradient du couple de serrage soit devenu inférieur à la valeur de seuil prévue pour le jugement de limite élastique,

à juger de l'achèvement du serrage du boulon sur la base de la variation se présentant dans le couple de serrage du boulon dans la section de serrage de boulon $\theta_0$ et

à interrompre le serrage du boulon sur la base de ce jugement.

**2.** Procédé de serrage d'un boulon suivant la revendication 1, selon lequel le coefficient $\alpha$ est compris entre 0,3 et 0,7.

**3.** Procédé de serrage d'un boulon suivant la revendication 1 ou 2, selon lequel l'angle $\theta_0$ est de 2 à 6 fois supérieur à l'angle $\theta_S$.

**4.** Procédé de serrage de boulon suivant la revendication 1, selon lequel la condition d'achèvement du serrage du boulon est déterminée par un jugement établissant si la différence $\Delta T$ entre un couple T existant en un point d'achèvement D, où la section de serrage de boulon $\theta_0$ est achevée, et un couple T existant en un point de début C, où la section de serrage de boulon $\theta_0$ commence, est inférieure à une valeur $\delta$ fixée à l'avance.

5. Procédé de serrage d'un boulon suivant la revendication 1, selon lequel la condition d'achèvement de serrage du boulon est déterminée par un jugement établissant si, dans les limites d'un intervalle de valeurs d'angle compris entre un angle qui est inférieur de l'angle $\theta_S$ à l'angle du point de début B de la section de serrage $\theta_0$ et l'angle du point d'achèvement D de cette section de serrage de boulon $\theta_0$, une courbe de couple mesuré L est située au-dessus d'une ligne de référence L' reliant les valeurs de couple $T_B$ et $T_D$ se présentant au début et à la fin de cet intervalle de valeurs d'angle.

6. Procédé de serrage d'un boulon suivant la revendication 5, selon lequel on calcule le jugement consistant à établir si la courbe de couple mesuré L est située au-dessus de la ligne de référence L' par les opérations consistant :

à calculer une valeur d'intégrale de couple Ta sur la base de la ligne de référence L', à l'aide de l'équation suivante :

$$Ta = [T_B + T_D/2](\theta_0 + \theta_S)$$

dans laquelle
$T_B$ est le couple au point B
$T_D$ est le couple au point D,

à calculer une valeur d'intégrale de couple Tb sur la base de la courbe de couple mesuré L, à l'aide de l'équation suivante :

$$Tb = \sum_{B}^{D} T\, (\theta_0 + \theta_S)$$

dans laquelle
T est le couple dans l'intervalle de valeurs d'angle et

à comparer les valeurs d'intégrale de couple Ta et Tb ainsi calculées en vue de juger si la courbe de couple mesuré L est située au-dessus de la ligne de référence L' lorsque la valeur d'intégrale de couple Ta est inférieure à la valeur d'intégrale de couple Tb.

7. Procédé de serrage d'un boulon suivant la revendication 1, selon lequel la condition d'achèvement du serrage du boulon est déterminée par un jugement établissant si une corrélation existant entre la courbe de couple mesuré L dans la section de serrage de boulon $\theta_0$ et une courbe de couple de référence déterminée à l'avance est supérieure à une valeur fixée à l'avance.

8. Procédé de serrage d'un boulon suivant la revendication 1, selon lequel la condition d'achèvement du serrage du boulon est déterminée par un jugement établissant si un gradient de couple G se présentant au point d'achèvement D de la section de serrage de boulon $\theta_0$ est inférieur à une valeur fixée à l'avance.

9. Procédé de serrage d'un boulon suivant la revendication 8, selon lequel la valeur fixée à l'avance est un gradient de couple G se présentant au point de début B de la section de serrage de boulon.

10. Procédé de serrage d'un boulon suivant la revendication 8, selon lequel la valeur fixée à l'avance est égale à la valeur de seuil prévue pour le jugement de limite élastique.

11. Procédé de serrage d'un boulon suivant la revendication 10, selon lequel la valeur fixée à l'avance est inférieure à la valeur de seuil prévue pour le jugement de limite élastique.

12. Procédé de serrage d'un boulon suivant la revendication 1, selon lequel la condition d'achèvement du serrage du boulon est déterminée par un jugement établissant si le gradient G du couple de serrage de boulon T est en diminution dans la section de serrage de boulon $\theta_0$.

13. Procédé de serrage d'un boulon suivant la revendication 1, selon lequel l'opération de serrage du boulon dans la section de serrage de boulon sur le second angle $\theta_0$ fixé à l'avance comprend une opération de serrage du boulon dans la section de serrage de boulon sur le premier angle $\theta_S$ fixé à l'avance, un certain nombre de fois fixé à l'avance, et selon lequel la condition d'achèvement de serrage du boulon est déterminée par un jugement établissant si le gradient de couple G est, d'une manière consécutive, inférieur à une valeur fixée à l'avance pour le nombre de fois fixé à l'avance après que le gradient du couple de serrage soit devenu inférieur à la valeur de seuil prévue pour le jugement de limite élastique.

14. Procédé de serrage d'un boulon suivant la revendication 13, selon lequel le nombre de fois fixé à l'avance est compris entre 2 et 5.

15. Procédé de serrage d'un boulon suivant la revendication 13 ou 14, selon lequel la valeur fixée à l'avance est égale à la valeur de seuil prévue pour le jugement de limite élastique.

16. Procédé de serrage d'un boulon suivant la revendication 13 ou 14, selon lequel la valeur fixée à l'avance est inférieure à la valeur de seuil prévue pour le jugement de limite élastique.

17. Procédé de serrage d'un boulon suivant la revendication 13 ou 14, selon lequel la valeur fixée à l'avance est un gradient de couple G se présentant lorsque le gradient de couple devient inférieur à la valeur de seuil prévue pour le jugement de limite élastique.

18. Procédé de serrage d'un boulon suivant la revendication 13 ou 14, selon lequel la valeur fixée à l'avance est un gradient de couple G se présentant lorsque le boulon (2) est serré pour la première fois après que le gradient de couple soit devenu inférieur à la valeur de seuil prévue pour le jugement de limite élastique.

## Patentansprüche

1. Verfahren zum Befestigen eines Bolzens mit den folgenden Schritten:

Ermitteln des Befestigungsdrehmomentes T jedes Mal, wenn der Bolzen (2) um einen ersten vorbestimmten Winkel $\theta_S$ angezogen wird;

Ermitteln des Gradienten G des Befestigungsdrehmomentes basierend auf dem ermittelten Befestigungsdrehmoment T;

Feststellen der Tatsache, daß der Gradient G des Befestigungsdrehmomentes kleiner wird als ein zur Feststellung des Nachgebepunktes vorgesehener Schwellwert, der bestimmt wird durch Multplizieren des maximalen Drehmomentgradienten MG oder eines diesem naheliegenden Wertes mit einem Koeffizienten $\alpha$, der kleiner als 1 ist,

gekennzeichnet durch die folgenden Schritte:

Anziehen des Bolzens (2) in einem Bolzenbefestigungsbereich um einen zweiten vorbestimmten Winkel $\theta_0$, der groß genug ist zum Beseitigen von Befestigungsdrehmomentschlupfen B-C, nachdem der Gradient des Befestigungsdrehmomentes kleiner geworden ist als der Schwellwert zur Feststellung des Nachgebepunktes;

Bestimmung der Beendigung des Befestigens des Bolzens basierend auf der Änderung des Befestigungsdrehmomentes des Bolzens in dem Bolzenbefestigungsbereich $\theta_0$; und

Beenden des Befestigens des Bolzens basierend auf der Bestimmung.

2. Verfahren zum Befestigen eines Bolzens nach Anspruch 1, bei dem der Koeffizient $\alpha$ zwischen 0,3 und 0,7 liegt.

3. Verfahren zum Befestigen eines Bolzens nach Anspruch 1 oder 2, bei dem der Winkel $\theta_0$ zwei bis sechs mal größer ist als der Winkel $\theta_S$.

4. Verfahren zum Befestigen eines Bolzens nach Anspruch 1, bei dem die Bolzenbefestigungsbeendigungs-Bedingung bestimmt wird durch die Feststellung, daß die Differenz $\Delta T$ zwischen einem Drehmoment T an einem Beendigungspunkt D, an dem der Bolzenbefestigungsbereich $\theta_0$ beendet ist, und einem Drehmoment T an einem Startpunkt C, an dem der Bolzenbefestigungsbereich $\theta_0$ beginnt, kleiner ist als ein voreingestellter Wert $\delta$.

5. Verfahren zum Befestigen eines Bolzens nach Anspruch 1, bei dem die Bolzenbefestigungsbeendigungs-Bedingung bestimmt wird durch die Feststellung, daß eine Drehmomentmeßkurve L, die innerhalb eines Winkelbereiches liegt, der sich zwischen einem Winkel, welcher um den Winkel $\theta_S$ kleiner ist als der Winkel des Startpunktes B des Bolzenbefestigungsbereiches $\theta_0$, und dem Winkel des Beendigungspunktes D des Bolzenbefestigungsbereiches $\theta_0$ erstreckt, sich über einer Referenzlinie L' befindet, die die Drehmomentwerte $T_B, T_D$ am Beginn und am Ende des Winkelbereiches verbindet.

6. Verfahren zum Befestigen eines Bolzens nach Anspruch 5, bei dem die Feststellung, ob sich die Drehmomentmeßkurve L über der Referenzlinie L' befindet, durch die folgenden Schritte berechnet wird:

Errechnen des auf der Referenzlinie L' basierenden Drehmomentintegralwertes Ta durch die folgende Gleichung:

$$Ta = \frac{T_B + T_D}{2} ( \theta_0 + \theta_S )$$

wobei
$T_B$ : Drehmoment am Punkt B
$T_D$ : Drehmoment am Punkt D;
Errechnen des auf der Drehmomentmeßkurve L basierenden Drehmomentintegralwertes Tb durch die folgende Gleichung:

$$Tb = \sum_{B}^{D} T ( \theta_0 + \theta_S )$$

wobei
T : Drehmoment in dem Winkelbereich; und

Vergleichen der so errechneten Drehmomentintegralwerte Ta und Tb, um festzustellen, ob die Drehmomentmeßkurve L sich über der Referenzlinie L' befindet, wenn der Drehmomentintegralwert Ta kleiner ist als der Drehmomentintegralwert Tb.

7. Verfahren zum Befestigen eines Bolzens nach Anspruch 1, bei dem die Bolzenbefestigungsbeendigungs-Bedingung bestimmt wird durch die Feststellung, daß die Korrelation zwischen der Drehmomentmeßkurve L in dem Bolzenbefestigungsbereich $\theta_0$ und einer vorbestimmten Referenzdrehmomentkurve größer ist als ein voreingestellter Wert.

8. Verfahren zum Befestigen eines Bolzens nach Anspruch 1, bei dem die Bolzenbefestigungsbeendigungs-Bedingung bestimmt wird durch die Feststellung, daß der Drehmomentgradient G am Beendigungspunkt D des Bolzenbefestigungsbereichs $\theta_0$ kleiner ist als ein voreingestellter Wert.

14

9. Verfahren zum Befestigen eines Bolzens nach Anspruch 8, bei dem der vorbestimmte Wert ein Drehmomentgradient G am Startpunkt B des Bolzenbefestigungsbereiches ist.

10. Verfahren zum Befestigen eines Bolzens nach Anspruch 8, bei dem der vorbestimmte Wert gleich dem Schwellwert zur Feststellung des Nachgebepunktes ist.

11. Verfahren zum Befestigen eines Bolzens nach Anspruch 10, bei dem der vorbestimmte Wert kleiner ist als der Schwellwert zur Feststellung des Nachgebepunktes.

12. Verfahren zum Befestigen eines Bolzens nach Anspruch 1, bei dem die Bolzenbefestigungsbeendigungs-Bedingung bestimmt wird durch die Feststellung, daß der Gradient G des Bolzenbefestigungsdrehmomentes T in dem Bolzenbefestigungsbereich $\theta_0$ abnimmt.

13. Verfahren zum Befestigen eines Bolzens nach Anspruch 1, bei dem der Schritt, in welchem der Bolzen in dem Bolzenbefestigungsbereich um den zweiten vorbestimmten Winkel $\theta_0$ angezogen wird, einen Schritt aufweist, bei dem der Bolzen mit einer vorbestimmten Anzahl von Malen in dem Bolzenbefestigungsbereich um den ersten vorbestimmten Winkel $\theta_S$ angezogen wird, und bei dem die Bolzenbefestigungsbeendigungs-Bedingung durch die Feststellung bestimmt wird, daß der Drehmomentgradient G bei der vorbestimmten Anzahl von Malen aufeinanderfolgend kleiner wird als ein voreingestellter Wert, nachdem der Gradient des Befstigungsdrehmomentes kleiner geworden ist als der Schwellwert zur Feststellung des Nachgebepunktes.

14. Verfahren zum Befestigen eines Bolzens nach Anspruch 13, bei dem die vorbestimmte Anzahl von Malen 2 bis 5 beträgt.

15. Verfahren zum Befestigen eines Bolzens nach Anspruch 13 oder 14, bei dem der voreingestellte Wert dem Schwellwert zur Feststellung des Nachgebepunktes gleich ist.

16. Verfahren zum Befestigen eines Bolzens nach Anspruch 13 oder 14, bei dem der voreingestellte Wert kleiner ist als der Schwellwert zur Feststellung des Nachgebepunktes.

17. Verfahren zum Befestigen eines Bolzens nach Anspruch 13 oder 14, bei dem der voreingestellte Wert der Drehmomentgradient G ist, wenn der Drehmomentgradient kleiner wird als der Schwellwert zur Feststellung des Nachgebepunktes.

18. Verfahren zum Befestigen eines Bolzens nach Anspruch 13 oder 14, bei dem der voreingestellte Wert der Drehmomentgradient G ist, wenn der Bolzen (2) zum ersten Mal angezogen wird, nachdem der Drehmomentgradient G kleiner geworden ist als der Schwellwert zur Feststellung des Nachgebepunktes.

# FIG.1

START

SET CONDITIONS — 100

START FASTENING — 101

CALCULATE DIFFERENCE — 102

UP-DATE MAX. DIFFERENTIAL VALUE MG — 103

$G(K) \leq MG \times \alpha$ — 104
NO / YES

TURNED BY $\theta_0$? — 105
NO / YES

TRUE YIELD POINT ? — 106
NO / YES

STOP FASTENING — 107

RECORD FASTENING DATA — 108

END

# FIG.2

FROM STEP 101

102

102A — DIFFERENTIAL COUNTER K = 0

102B — SAMPLING NUMBER COUNTER a = 0

FROM STEPS 104, 105, 106

102C — K = K + 1

102D — TURNED BY $\theta_A$ ?

102E — a = a + 1

102F — READ TORQUE VALUE

102G — CALCULATE AVERAGE

$$S_A (K) = \frac{S (K)}{a}$$

102H — a = M ?   NO

YES

102 I — K > 1   NO

YES

102J — CALCULATE DIFFERENCE

$$G (K) = S_A (K) - S_A (K - 1)$$

TO STEP 103

17

# FIG.3

START, STOP,
FORWARD,
REVERSE

MOTOR

DRIVING
CIRCUIT

REDUCER

CLUTCH

TORQUE
DETECTOR

PULSE
GENERATOR

TORQUE SIGNAL

TURNING ANGLE
SIGNAL

AMP

A/D
CONVERTER

I/O
PORT

ROM

CPU

RAM

INTERFACE

PRINTER

CRT

EP 0 170 068 B1

# FIG.4

# FIG.5

# FIG.6

$$Ta = \left(\frac{T_B + T_D}{2}\right) \cdot (\theta_o + \theta_s)$$

— 106—2A

$$Tb = \sum_{B}^{D} T \times (\theta_s + \theta_o)$$

— 106—2B

106

TO STEP 102

$Ta < Tb$ — 106—2C

NO

YES

TO STEP 107

# FIG.7

MAXIMUM DIFFERENTIAL

MG

G (K)

MG × α

TORQUE DIFFERENTIAL

$T_{D2}$
$T_{B2}$
$T_{D1}$

$T_{B1}$

$B_2$
$C_2$ $L_2$ $D_2$
$L'_2$
$\theta_s$ $\theta_o$

$L'_1$
$B_1$
$C_1$
$D_1$

$\theta_s$ $\theta_o$

TORQUE

TURNING ANGLE $\theta$

20

# FIG.8

TO STEP 102

G $(K + \theta_0) <$ G $(K)$

106

NO

106-3A

YES

TO STEP 107

# FIG.10

TO STEP 102

106

NO

G $(K+\theta_0) <$ MG x $\alpha$

106-4A

YES

TO STEP 107

# FIG.9

MAX. DIFFERENTIAL MG

G $(K + \theta_0)_1$

G $(K)_2$

G $(K + \theta_0)_2$

G $(K)_1$

MG x $\alpha$

TORQUE DIFFERENTIAL

TORQUE T

$C_2$  $D_2$

$D_1$

$C_1$

$\theta_0$

$\theta_0$

TURNING ANGLE $\theta$

21

# FIG.11

TO STEP 102

106

$G(K + \theta o) < MG \times \beta$

NO

106–5A    YES

TO STEP 107

# FIG.12

MAX. DIFFERENTIAL MG

$G(K + \theta o)_1$

$G(K)_2$

$G(K)_1$

$G(K + \theta o)_2$

$MG \times \alpha$

$MG \times \beta$

TORQUE DIFFERENTIAL

TORQUE T

$C_2$    $D_2$

$D_1$

$\theta o$

$C_1$

$\theta o$

TURNING ANGLE $\theta$

# FIG.13

n = 0 — 106, 106—6A

n = n + 1 — 106—6B

$G(K + n \cdot \theta s) \leq G(K - (n-1) \cdot \theta s)$ — 106—6C

TO STEP 102

NO

YES

$n = \frac{\theta o}{\theta s}$ ? — 106—6D

NO

YES

TO STEP 107

# FIG.14

MAX. DIFFERENTIAL MG

$G(K + 2\theta s)_1$

$G(K + \theta o)_1$

$\theta s$

$G(K)_1$

$G(K + \theta s)_1$

$G(K)_2$

$G(K + \theta s)_2$

$G(K + 2\theta s)_2$

$MG \times \alpha$

TORQUE DIFFERENTIAL

TORQUE T

$C_2$ $D_2$

$D_1$

$C_1$

$\theta o$

$\theta o$

TURNING ANGLE $\theta$

FIG.16

FIG.15

# FIG.17

FROM STEP 201

202A — DIFFERENTIAL COUNTER K = 0

FROM STEP 207

202A' — STEP NUMBER COUNTER N = 0

FROM STEPS 204, 205, 208

202

202B — SAMPLING NO. COUNTER a = 0

202C — K = K + 1

202D — TURNED BY $\theta_A$ ?  NO

YES

202E — a = a + 1

202F — READING TORQUE Ta

202G — CALCULATE AVERAGE

$$S_A (K) = \frac{S (K)}{a}$$

202H — a = M ?  NO

YES

202I — K > 1  NO

YES

202J — CALCULATE DIFFERENCE

$$G (K) = S_A (K) - S_A (K + 1)$$

TO STEP 203

# FIG.18

$$G(K + N \cdot \theta s) \leq MG \times \alpha$$

207

207—1

NO → TO STEP 202

YES

# FIG.19

TORQUE DIFFERENTIAL

MAX. DIFFERENTIAL MG

$G(K + 2 \cdot \theta s)_1$

$G(K + \theta s)_1$

$G(K)_1$

$G(K)_2$

$G(K + \theta s)_2$

$G(K + 2 \cdot \theta s)_2$

$G(K + 3 \cdot \theta s)_2$

$MG \times \alpha$

TORQUE T

$S(K + 1)$

$S(K)$

$S(K - 1)$

$\theta s$

$C_1$

$C_2$

$N \cdot \theta s$

$N \cdot \theta s$

$\theta_A$

$\theta$

# FIG.20

$$G (K + N \cdot \theta s) \leq G (K)$$

NO → TO STEP 202

207

207-2

YES

# FIG.21

MAX. DIFFERENTIAL MG

$G (K + 2 \cdot \theta s)_1$

$G (K + \theta s)_1$

$G (K)_1$

$G (K)_2$

$G (K + \theta s)_2$

$G (K + 2 \cdot \theta s)_2$

MG x $\alpha$

THRESHOLD G (K)

TORQUE DIFFERENTIAL

TORQUE T

$C_1$

$C_2$

$N \cdot \theta s$

$N \cdot \theta s$

TURNING ANGLE $\theta$

27

# FIG.22

$$G(K + N \cdot \theta s) \leq MG \times \beta$$

NO
TO STEP 202

207

YES

207--3

# FIG.24

$$G(K + N \cdot \theta s) \leq G(K + (N-1) \cdot \theta's)$$

NO
TO STEP 202

207

YES

207--4

# FIG.23

TORQUE DIFFERENTIAL

MAX. DIFFERENTIAL MG

$G(K + 2 \cdot \theta's)_1$

$G(K + \theta s)_1$

$G(K)_1$

$G(K)_2$

$G(K + \theta s)_2$

$G(K + 2 \cdot \theta s)_2$

$MG \times \alpha$

$MG \times \beta$

TORQUE T

$C_2$

$C_1$

$N \cdot \theta s$

$N \cdot \theta's$

TURNING ANGLE $\theta$

# FIG.25

# FIG.26

START

SET CONDITIONS — 300

SET ALLOWABLE LIMIT — 301

(A) →

START FASTENING — 302

START DETECTING TORQUE T — 303

$T \geq T_N$  NO — 304

YES

START COUNTING TURNING ANGLE $\theta x$ — 305

$T \geq T_u$  YES — 306

NO

CALCULATE DIFFERENCE — 307

FA = 1 — 312

UP-DATE MAX. DIFFERENTIAL MG — 308

$G(K) \leq MG \times \alpha$  NO — 309

YES

STOP FASTENING — 310

STORE TORQUE AND TURNING ANGLE — 311

$T \leq T_L$  YES — 313

NO

FB = 1 — 316

$\theta x \geq \theta u$  YES — 314

NO

FC = 1 — 317

$\theta x \leq \theta L$  YES — 315

NO

FD = 1 — 318

IS EACH FLAG "O" ?  NO — 319

YES

DISPLAY ALARM — 321

MODIFY ALLOWABLE RANGE — 320

SET FLAGS FA—FD TO "O"

(A)

# FIG.27

FROM STEP 306

307

307A — DIFFERENTIAL COUNTER K = 0

307B — SAMPLING NO. COUNTER a = 0

307C — K = K + 1

307D — TURNED BY $\theta_A$ — NO

YES

307E — a = a + 1

307F — READ TORQUE Ta

307G — CALCULATE AVERAGE

$$S_A(K) = \frac{S(K)}{a}$$

307H — a = M ? — NO

YES

307I — K > 1 — NO

307J — YES

CALCULATE DIFFERENCE

$$G(K) = S_A(K) - S_A(K-1)$$

TO STEP 308

31

# FIG.28

# FIG.29